# EUROPÄISCHE PATENTANMELDUNG

(11) **EP 4 629 076 A1**
(43) Veröffentlichungstag der Anmeldung: **08.10.2025**
(21) Anmeldenummer: 24168019.8
(22) Anmeldetag: 02.04.2024
(51) Int. Cl.: G06F 9/50

(54) **NETZWERKTECHNISCH VERTEILTES AGENTENSYSTEM ZUM KOOPERATIVEN PROBLEMLÖSEN**

(71) Anmelder: Kiessig, Rene, 04277 Leipzig (DE)
(72) Erfinder: Kiessig, Rene, 04277 Leipzig (DE)
(74) Vertreter: Reich, Jochen

(57) **Zusammenfassung**

Die vorgeschlagene Erfindung schafft ein netzwerktechnisch verteiltes Agentensystem zum kooperativen Problemlösen, wobei einzelne Agenten, welche als physische Hardwarekomponenten vorliegen können, kooperativ eine gemeinsame Aufgabe bewerkstelligen. Bei den Agenten kann es sich beispielsweise um Drohnen, Roboter und/ oder autonome Fahrzeuge handeln. Diese verwalten sich dezentral und autonom und bekommen mittels einer Schnittstelleneinheit eine Aufgabe gestellt, welche sie kooperativ in Einzelschritten erledigen. Das vorgeschlagene Verfahren ist iterativ und nach dem Begutachten von Teilschritten wird die Aufgabe derart angepasst, sodass sich nach mehreren Iterationen ein Endergebnis einstellt. Hierbei sind die einzelnen Agenten in der Lage autonom miteinander in Interaktion zu treten und zu kommunizieren. Hierbei ist keine zentrale Servereinheit notwendig, sondern die vorliegende Erfindung nutzt die sogenannte Schwarmintelligenz aus. So können beispielsweise einige der Agenten mit bildgebenden Sensoren ausgestattet werden, die sodann die Arbeitsschritte überwachen und potentiell mitarbeitende Agenten identifizieren und mit ihnen Kontakt aufnehmen. Die vorliegende Erfindung ist ebenso gerichtet auf eine entsprechend eingerichtete Systemanordnung zur Durchführung des Verfahrens sowie auf ein Computerprogrammprodukt mit Steuerbefehlen, welche das vorgeschlagene Verfahren implementieren bzw. die vorgeschlagene Systemanordnung betreiben.

## Beschreibung

Die vorgeschlagene Erfindung schafft ein netzwerktechnisch verteiltes Agentensystem zum kooperativen Problemlösen, wobei einzelne Agenten, welche als physische Hardwarekomponenten vorliegen können, kooperativ eine gemeinsame Aufgabe bewerkstelligen. Bei den Agenten kann es sich beispielsweise um Drohnen, Roboter und/ oder autonome Fahrzeuge handeln. Diese verwalten sich dezentral und autonom und bekommen mittels einer Schnittstelleneinheit eine Aufgabe gestellt, welche sie kooperativ in Einzelschritten erledigen. Das vorgeschlagene Verfahren ist iterativ und nach dem Begutachten von Teilschritten wird die Aufgabe derart angepasst, sodass sich nach mehreren Iterationen ein Endergebnis einstellt. Hierbei sind die einzelnen Agenten in der Lage autonom miteinander in Interaktion zu treten und zu kommunizieren. Hierbei ist keine zentrale Servereinheit notwendig, sondern die vorliegende Erfindung nutzt die sogenannte Schwarmintelligenz aus. So können beispielsweise einige der Agenten mit bildgebenden Sensoren ausgestattet werden, die sodann die Arbeitsschritte überwachen und potentiell mitarbeitende Agenten identifizieren und mit ihnen Kontakt aufnehmen. Die vorliegende Erfindung ist ebenso gerichtet auf eine entsprechend eingerichtete Systemanordnung zur Durchführung des Verfahrens sowie auf ein Computerprogrammprodukt mit Steuerbefehlen, welche das vorgeschlagene Verfahren implementieren bzw. die vorgeschlagene Systemanordnung betreiben.

Bekannte Verfahren arbeiten derart, dass ein zentraler Server bzw. mehrere zentrale Server bereitgestellt werden, welche sodann mit den einzelnen Agenten kommunizieren. Diese Lösung ist jedoch fehleranfällig und insbesondere ist diese Lösung nicht robust gegen Angriffe. So können unberechtigte Dritte Zugriff auf den Server erlangen und sodann das gesamte System stören. Zudem können sensible Daten entwendet werden und es kann besonders nachteiligen Fällen sogar dazu kommen, dass die Aufgaben derart abgeändert werden, dass sie den ursprünglich angedachten Aufgaben zuwiderlaufen.

Aus dem Stand der Technik sind ferner sogenannte Softwareagenten bekannt, welche über ein Netzwerk Kommunikationsprotokolle aushandeln und ebenfalls gemeinsam Aufgaben bewerkstelligen. Diese nutzen jedoch andere Techniken und sind darüber hinaus typischerweise nicht in der Lage, potentielle Kooperationspartner autonom zu erkennen. Beispielsweise spielt hier eine Bildverarbeitung bzw. bildgebende Sensoren überhaupt keine Rolle. Dies bezieht sich auf die Identifizierung von potentiellen Kooperationspartnern wie auch die Begutachtung eines Endergebnisses. Bei Software handelt es sich also um Kooperationen im rein virtuellen Bereich in Abgrenzung zum realweltlichen Bereich.

Multi-Agenten-Systeme (MAS) sind bekannte Sammlungen von autonomen, interaktiven Agenten, die gemeinsam Aufgaben lösen können, die über ihre individuellen Fähigkeiten hinausgehen. Im Bereich des Standes der Technik sind Agenten normalerweise Software-Entitäten, die in der Lage sind, Umgebungsinformationen zu sammeln, zu verarbeiten und entsprechend zu handeln.

Aus dem Stand der Technik sind Überwachungssysteme bekannt, welche beispielsweise Großveranstaltungen derart überwachen, dass Kameras auf bestimmte Bereiche, zum Beispiel eines Gebäudes, ausgerichtet sind. Hierbei werden Kameras an der Decke so angebracht, dass sie den zu überwachenden Bereich einsehen können. Somit wird also im Stand der Technik unabhängig von der Anzahl der Agenten ein bestimmter Bereich überwacht, egal, wie viele Agenten sich hier gerade befinden. Dieser uneingeschränkte Agenten kreis liefert größere Datenmengen, wobei zugrunde gelegt wird, dass ausreichend Rechenkapazitäten zur Verfügung stehen. Gerade bei mobilen Endgeräten stehen diese Rechenkapazitäten typischerweise nicht zur Verfügung.

Der Stand der Technik sieht ferner vor, dass die Überwachungskameras typischerweise selbst keine Datenverarbeitung vornehmen, sondern vielmehr die erfassten Bilddaten an eine entfernt angerichtete Recheneinheit übermitteln. Diese Recheneinheit umfasst typischerweise umfangreiche Hardwarekapazitäten. So werden Daten an mindestens einen Server übermittelt, der die Datenverarbeitung übernimmt. Insofern sind Überwachungskameras typischerweise passive Bildgeber, die entsprechend ihrem Blickwinkel Bilddaten liefern. Aktive Steuerungseinheiten sind zu diesen Kameras entfernt angeordnet und so kann beispielsweise ein Überwachungspersonal einen Blickwinkel und einen Zoomfaktor der Kamera manuell eingeben, was sodann entfernt umgesetzt wird. Der Stand der Technik zeigt also kein Erfassung und Verarbeitung von Daten in einem einzigen mobilen Endgerät. Der Personenkreis ist hier typischerweise nicht eingeschränkt, sondern viele Personen werden erfasst. Es werden immer diejenigen Personen bzw. Objekte erfasst, die sich gerade im Blickwinkel der Kamera befinden.

Weiter aus dem Stand der Technik ist es bekannt, aus einer Vielzahl von Objekten auf einem Bild einzelne Personen bzw. Objekte zu identifizieren. So können beispielsweise Personen in einer Datenbank hinterlegt werden. Von diesen Agenten wird ein Foto angefertigt und sodann erfolgt ein Abgleich dieses Fotos mit der erfassten Datenmenge. Bei einer Übereinstimmung kann sodann eine Information ausgegeben werden, dass sich diese Person an einem bestimmten Ort befindet.

Weiter ist es aus dem Stand der Technik bekannt, bei einem autonomen Fahren eine Kamera vorausschauend auf die Straße zu richten und sodann eine Objekterkennung durchzuführen. Hierbei ist es möglich, Verkehrsschilder auszulesen und auch derart zu interpretieren, dass beispielsweise eine Geschwindigkeitsbegrenzung ausgelesen werden kann. Typischerweise befinden sich in einem Sichtfeld einer Kamera eines Autos nur wenige Verkehrsschilder, so dass es hier nicht zu Problemen bezüglich der zugrunde liegenden Hardware kommt. Diese Bildinformationen werden innerhalb des Autos ausgewertet und das technische Problem der übermäßigen Datenmengen ergibt sich somit gar nicht. Dieses Szenario schlägt typischerweise ebenfalls eine passive Kamera vor, welche lediglich die Verkehrsschilder erfasst und sodann werden diese Verkehrsschilder interpretiert.

Der Stand der Technik hat das Problem, dass innerhalb einer Bildquelle potentiell hohe Anzahlen von zu erkennenden Agenten bzw. Objekten vorliegen können. Gerade bei mobilen Endgeräten sind die Hardwarekapazitäten begrenzt und oftmals ist eben auch die Bandbreite begrenzt. Somit besteht im Stand der Technik der Nachteil, dass umfangreiche Bilddaten oftmals nicht an einen entfernt ausgelagerten Server übermittelt werden können. Werden hingegen die Daten in dem mobilen Endgerät selbst verarbeitet, so benötigt dies umfangreiche Hardwarekapazitäten. Hardwarekapazitäten beziehen sich hierbei insbesondere auf die Prozessorleistung und den Umfang und die Geschwindigkeit des Speichers.

Die vorgenannten Probleme verschärfen sich dahingehend, dass typischerweise bei einer Bildverarbeitung eine Echtzeitanforderung besteht, d.h. also, dass aus subjektiver Sicht des Benutzers eine sofortige Verarbeitung stattfinden muss. Gerade bei einem Bewegen einer Kamera entstehen viele Bilddaten, welche sodann sofort verarbeitet werden müssen.

Es ist daher eine Aufgabe ein selbstorganisierendes Verfahren zum verteilten und kooperativen Problemlösen im realweltlichem Raum bereitzustellen welches besonders fehlerrobust ist. Ferner ist es eine Aufgabe der vorliegenden Erfindung eine entsprechend eingerichtete Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum verteilten und kooperativen Problemlösen im realweltlichem Raum durch autonome Agenten mit automatisierten Einrichtungen von Kommunikationskanälen vorgeschlagen, aufweisend ein Bereitstellen eines realweltlichen Aufgabenprofils; ein Identifizieren von potentiell ausführenden Agenten anhand jeweils derer Registrierungsinformation und/ oder mittels eines stetigen Auslesens von bildgebenden Sensoren durch bekannte ausführende Agenten; ein Abgleichen der identifizierten, potentiell ausführenden Agenten mit dem bereitgestellten Aufgabenprofil, wobei das Aufgabenprofil in Teilaufgaben mit Auswahlkriterien heruntergebrochen wird und die Agenten Auswahlinformation bezüglich der Auswahlkriterien über einen Kommunikationskanal bereitstellen; ein Auswählen von auszuführenden Agenten anhand des Abgleichs der Auswahlkriterien und bereitgestellter Auswahlinformation; ein Zuweisen der jeweiligen Teilaufgabe an jeweils einen auszuführenden Agenten über den Kommunikationskanal; ein optisches Erfassen eines Ergebnisses nach dem Ausführen der jeweiligen Teilaufgabe durch mindestens einen Agenten; und ein Angleichen des realweltlichen Aufgabenprofils in Abhängigkeit des erfassten Ergebnisses.

Die vorgeschlagene Erfindung bildet den Stand der Technik fort und schafft einen Mehrwert, indem sie ein System schafft, das Konzepte in physischen Agenten integriert, die in der Lage sind, autonom und kooperativ in der realen Welt zu agieren. Solche Systeme könnten eine breite Reihe von Anwendungen haben, von der autonomen Überwachung und Wartung bis hin zu Such- und Rettungsoperationen und darüber hinaus. Innovationen in diesem Bereich sind Technologien wie maschinelles Lernen, verteilte Datenverarbeitung und fortschrittliche Sensortechnologie. Durch die Integration dieser Technologien können die Agenten lernen, ihre Umgebung besser zu verstehen und effektiver auf Änderungen zu reagieren. Der iterative Ansatz der vorgeschlagenen Erfindung, bei dem die Aktionen der Agenten nach der Begutachtung von Teilergebnissen angepasst werden, ist ein Schlüsselelement für flexible und adaptive Systeme. Diese Vorgehensweise ermöglicht es den Agenten, aus Erfahrungen zu lernen und ihre Vorgehensweise zur Lösung zukünftiger Aufgaben zu verfeinern.

Darüber hinaus kann das Fehlen einer zentralen Servereinheit in solchen Systemen dazu beitragen, die Ausfallsicherheit zu verbessern und die Skalierbarkeit zu erhöhen, da neue Agenten ohne umfangreiche Konfigurationsänderungen hinzugefügt werden können.

Bei dem vorgeschlagenen Verfahren handelt es sich um ein verteiltes Verfahren, da die einzelnen Agenten miteinander netzwerktechnisch verbunden werden. Dies kann derart erfolgen, dass die einzelnen Agenten ein Kommunikationsmodul aufweisen und somit beispielsweise über Mobilfunk miteinander kommunizieren. Hierbei sind mehrere Kommunikationsmöglichkeiten wie Bluetooth, WLAN und/ oder Mobilfunk denkbar. Die Agenten kooperieren miteinander und sind daher in einem Netzwerk verteilt, das sogenannte Punkt zu Punkt Netzwerkknoten durch die einzelnen Agenten schafft. Generell ist es möglich, dass gemäß der vorgeschlagenen Erfindung mittels zentraler Kommunikationseinheiten kommuniziert wird, wie das paketvermittelte Internet. Besonders vorteilhaft ist es jedoch, wenn die einzelnen Agenten Punkt-zu-Punkt Verbindungen aufbauen, sodass eine erste Kommunikationsstrecke mittels eines anderen Kanals implementiert werden kann, wie eine zweite Kommunikationsstrecke. Beispielsweise kann ein erster Agent mit einem zweiten Agent mittels WLAN kommunizieren und der zweite Agent kann mit einem Dritten Agent mittels Bluetooth kommunizieren. Somit wird ein ausfallsicheres Netzwerk geschaffen, welches nicht auf einer einzelnen Technologie basiert, sondern vielmehr können die einzelnen Agenten prüfen, welche Kommunikationsmittel zur Verfügung stehen und ein geeignetes hieraus auswählen. Ist aus irgendeinem Grund ein erstes Kommunikationsmittel gestört, so kann einfach auf ein anderes Kommunikationsmittel zurückgegriffen werden. Somit können lokale Störungen umgangen werden und es entsteht ein heterogenes Netzwerk, welches potentiell viele Kommunikationsmittel verwendet. Ein Agent kann beispielsweise ein VR Brille sein, welche mit einem mobilen Endgerät gekoppelt ist. Die VR Brille kann dann eine Teilaufgabe bewerkstelligen, indem diese Umgebungsbilder liefert, während das mobile Endgerät diese mittels Bluetooth empfängt und die Teilaufgabe der entfernten Informationsübermittlung durchführt.

Das Problemlösen bezieht sich generell auf einen realweltlichen Raum und auf eine real gestellte Aufgabe. So interagieren die einzelnen Agenten physikalisch und nicht im virtuellen Raum. Beispielsweise ist es möglich, dass die Aufgabe darin besteht, eine Unfallstelle abzusichern. Hierzu kann also eine Drohne mit einem autonomen Räumfahrzeug Kontakt aufnehmen. Sowohl die Drohne als auch das autonome Fahrzeug können über bildgebende Sensoren verfügen und es wird erkannt, dass die Drohne besonders bevorzugt den geographischen Raum bildgebend erfassen kann und somit kann die Drohne Kommunikationsanweisungen direkt an ein autonomes Fahrzeug übersenden. Das autonome Fahrzeug kann ebenfalls über ein Kamerasystem bzw. ein Radarsystem oder ein Lidar System verfügen und somit kann die Unfallstelle in einer ersten Teilaufgabe optisch durch beide Systeme erkannt werden. Hierbei ist keine zentrale Steuerungseinheit notwendig, sondern vielmehr agieren in diesem Beispiel die Drohne und das autonome Fahrzeug autonom und aufgabenteilig. Eine optische Erfassung ist keinesfalls auf den sichtbaren Bereich beschränkt. Dass das Problemlösen generell im realweltlichen Raum erfolgt, schließt nicht aus, das Teilaufgaben virtuell zwischen Agenten durchgeführt werden.

Vorteilhaft ist es, dass mindestens zwei Agenten im realen Raum miteinander interagieren.

Die einzelnen Agenten handeln für sich autonom, sind jedoch in dem Verbund der weiteren Agenten eingebunden. So übernehmen diese autonome Teilaufgaben und das System insgesamt bewerkstelligt die gestellte Aufgabe insgesamt autonom. Dies geschieht derart, dass die einzelnen Agenten Teilaufgaben übernehmen und somit das Gesamtsystem der mehreren Agenten die Aufgabe bzw. das Problem insgesamt löst.

Hierzu können potentiell ausführende Agenten derart erkannt werden, dass ein erster Agent optisch die Umgebung scannt und beispielsweise erkennt, dass ein potentiell hilfreicher zweiter Agent in unmittelbarer Nähe zur Verfügung steht. Dies kann auch wiederum durch ein Kamerasystem erkannt werden. Sodann kann mit diesem Agenten Kontakt aufgenommen werden und dieser kann bezüglich einer Teilaufgabe angeleitet werden.

In einem vorbereitenden Verfahrensschritte erfolgt ein Bereitstellen eines Aufgabenprofils, welches spezifiziert, was umzusetzen ist bzw. welche Handlungsschritte hierzu notwendig sind. Das Aufgabenprofil kann durch die Agenten selbst erstellt werden oder aber auch mit menschlichem Zutun, übermittelt werden. Zudem kann aus einer Datenbank ausgelesen werden, in welcher Situation welche Aufgabe notwendig ist und somit kann aus bereits vergangenen und abgespeicherten Aufgabelösungen identifiziert werden, was in einer entsprechenden Situation zu veranlassen ist. Das Aufgabenprofil spezifiziert, also eine komplexe, d. h. zusammengesetzte, Aufgabe, welche sodann kooperativ durch die Agenten bewerkstelligt werden soll.

Daraufhin erfolgt ein Identifizieren von potentiell ausführenden Agenten anhand jeweils der Registrierungsinformation und/ oder mittels eines stetigen Auslesens von bildgebenden Sensoren durch bekannte ausführende Agenten. Die potentiell ausführenden Agenten können also wiederum entweder in einer Datenbank hinterlegt sein oder aber sie werden beispielsweise durch ein Kamerasystem erkannt. Wird zum Beispiel eine Drohne über einen Unfallort entsendet, so kann diese mittels eines GPS Sensors auslesen, welche weiteren Agenten sich in unmittelbarer Nähe befinden. Die Drohne kann jedoch auch als eines Kamerasystems erkennen, welche potentiell ausführenden Agenten in der Nähe sind und diese kontaktieren. So kann ein Agent mit einem Code, zum Beispiel einem Strichcode oder einem QR-Code versehen sein und die Drohne ist somit in der Lage, den entsprechenden Agenten zu identifizieren. Entsprechende Kontaktmöglichkeiten können in einer Registrierungsinformation hinterlegt sein oder es wird einfach ein Broadcast durchgeführt, d. h. also eine flächendeckende, ungerichtete Kommunikation und es wird auf eine Rückgabe gewartet. Somit sind dem zugrunde liegenden Verfahren also alle verfügbaren Agenten bekannt und es kann damit begonnen werden, die Aufgabe zu analysieren und entsprechende Agenten zu kontaktieren, welche potenziell hilfreich sein könnten.

Um das vorgeschlagene Verfahren initial zu starten, werden Agenten bzw. zumindest ein Agent mit der Ausführung beauftragt. Dieser mindestens eine Agent kann sodann weitere Agenten ausfindig machen und diese in die Aufgabenlösung mit einbeziehen. Wird zum Beispiel ein bestimmter Einsatzort ausgewählt, so kann eine Drohne, ein unbemanntes Luftfahrzeug oder ein autonomes Fahrzeug in diese Region entsandt werden und dieser Agent kann sodann weitere Agenten anfordern. Das Verfahren wird also von mindestens einem Agenten initialisiert und sodann werden die kooperierenden Agenten identifiziert, ausgewählt und beauftragt. Somit arbeitet das System insgesamt autonom bzw. jeder Agent bearbeitet autonom seine zugewiesene Teilaufgabe. Generell kann das vorgeschlagene Verfahren von einem Benutzer angestoßen werden und sodann wird diese Aufgabe an einen Agenten delegiert, der sodann die Unteraufgaben weiter delegiert bzw. weitere Agenten beauftragen sich gegenseitig. Somit können alle verfügbaren, also potentiell ausführenden Agenten, untereinander die Teilaufgaben verteilen und es wird für jede Teilaufgabe ein geeigneter Agent gefunden. Ist die Ausführung einer Aufgabe bzw. einer Teilaufgabe nicht möglich, so wird versucht, die Aufgabe weiter herunter zu brechen oder aber eine alternative, gleichwertige Aufgabe wird ausgeführt. Somit arbeiten die Agenten autonom und finden eigenständig Lösungswege zur Bearbeitung der ihnen zugewiesenen Aufgabe bzw. Teilaufgabe. Die Abläufe der Aufgabenbewältigung kann jeweils abgespeichert werden und unter allen Agenten geteilt werden. Somit wird eine Wissensbasis geschaffen, anhand derer in darauf folgenden Verfahrensschritten zurückgegriffen werden kann. Typischerweise wird das Verfahren iterativ ausgeführt, sodass mit jedem neuen Einsatz aus dem geschaffenen Ergebnis gelernt wird und es werden Handlungsanweisungen abgespeichert, die möglichst effizient zur Lösung der Aufgabe führen. Auf diese Wissensbasis kann von allen Agenten zugegriffen werden und diese können vorteilhafte Lösungswege einspeichern.

Um geeignete Agenten zu finden, erfolgt ein Abgleichen der identifizierten, potentiell ausführenden Agenten mit dem bereitgestellten Aufgabenprofil. Es wird also überprüft, welche der potentiell ausführenden Agenten geeignet wären. Das Aufgabenprofil umzusetzen bzw. die Aufgabe zu erfüllen bzw. daran mitzuwirken. Es wird also eine Mehrzahl von Agenten identifiziert, wobei jedoch nicht jeder Agent die geeigneten Fähigkeiten bereitstellt, die zur Aufgabenlösung beitragen können. Aus diesen potentiell ausführenden Agenten muss also eine Anzahl geeigneter Agenten ausgewählt werden, die dann tatsächlich Teilaufgaben übernimmt. Hierfür wird das Aufgabenprofil in Teilaufgaben heruntergebrochen, welche wiederum Auswahlkriterien für die Agenten implizieren. Es kann also anhand einer abgespeicherten Wissensbasis, eines neuronalen Netzes und/ oder anhand einer bereitgestellten Metrik festgestellt werden, welche Teilaufgaben notwendigerweise ausgeführt werden müssen, um die Aufgabe zu lösen, bzw. das Aufgabenprofil zu erfüllen. Entsprechende Kriterien werden in Parameter gespaltet. Es kann zum Beispiel eine Know-how bezogene Auswahl erfolgen, also eine Auswahl anhand von Handlungswissen, welches der jeweilige Agent bereithalten muss. Generell muss auch die Befähigung vorhanden sein. Physikalisch muss ein Agent in der Lage sein, eine bestimmte Aufgabe zu lösen. Soll beispielsweise ein Unfallort geräumt werden, so müssen Agenten bereitstehen, die Sensoren in ausreichender Auflösung bereit stellen, um die Unfallstelle optisch zu erfassen. Andere Agenten müssen wiederum geeignete Räumungsmittel bereithalten. So kann beispielsweise für die Aufgabe des Räumens der Unfallstelle ein Räumfahrzeug angefordert werden. Darüber hinaus können auch Agenten priorisiert werden, die generell für eine bestimmte Aufgabe geeignet sind. Generell hat jede Aufgabe auch eigene Parameter, die das Ergebnis spezifizieren, wie beispielsweise eine Zeitvorgabe in der die Aufgabe durchgeführt werden muss. Anhand dieser Auswahlkriterien der Teilaufgaben werden die Agenten identifiziert, die geeignet sind. Hierzu stellen die Agenten eine Auswahlinformation bereit und es kann ein Abgleich erfolgen, welche Agenten Auswahlkriterien erfüllen, also die gewünschte Auswahlinformation bereitstellen. Es erfolgt also in diesem Verfahrensschritt ein Vergleichen der Anforderung bezüglich der jeweiligen Teilaufgabe und ein Bereitstellen von Eigenschaften des jeweiligen Agenten, worauf hin entschieden werden kann, ob der Agent für diese Teilaufgabe geeignet ist.

In einem darauffolgenden Verfahrensschritte erfolgt ein Auswählen von auszuführenden Agenten aus der Menge der potentiell ausführenden Agenten anhand des Abgleichs der Auswahlkriterien und bereitgestellte Auswahlinformation. Es wird also derjenige Agent für die entsprechende Teilaufgabe gewählt, der diese am besten ausführen kann. Wird die Teilaufgabe nicht durch einen Agenten ausgeführt, so wird versucht iterativ die Teilaufgabe wiederum herunter zu brechen und dann nach geeigneten Agenten zu suchen. Wird insgesamt kein geeigneter Agent gefunden, so kann derjenige Agent gewählt werden, der am besten geeignet ist, also dem gewünschten Ergebnis bzw. dem Auswahlkriterium möglichst nahekommt.

Daraufhin erfolgt ein Zuweisen der jeweiligen Teilaufgabe an jeweils einen auszuführenden Agenten über den Kommunikationskanal. Da die Teilaufgaben beliebig feingranular spezifiziert werden können, ist es möglich, dass eine Teilaufgabe wiederum in weitere Teilaufgaben untergliedert wird und sodann eine Teilaufgabe auch durch mehrere Agenten ausgeführt wird. Letztendlich muss jeder nur eine Aufgabe bekommen, die er löst, und im Gesamtergebnis muss die übergeordnete Aufgabe erfüllt werden.

Die Agenten bzw. der Agent führt sodann seine jeweilige Teilaufgabe aus und es erfolgt wiederum ein optisches Erfassen durch mindestens einen Agenten. Mindestens ein Agent richtet also wiederum sein Kamerasystem auf die relevante Stelle und überprüft, ob die Aufgabe erfüllt wurde. Hierbei ist es auch möglich mehrere Agenten zum optischen Erfassen heranzuziehen, sodass ein umfassendes Bild des Ergebnisses der Ausführungen der Teilaufgaben entsteht.

Anhand dieses erfassten Ergebnisses wird das realweltliche Aufgabenprofil angeglichen, sodass erkannt wird, ob die Aufgabe erledigt ist bzw. ob Restarbeiten zu erledigen sind. Diese Restarbeiten werden dann in einem neuen Aufgabenprofil abgespeichert und das Verfahren beginnt mit einer weiteren Iteration und arbeitet dieses Aufgabenprofil ab.

Erfindungsgemäß ist es vorteilhaft, dass die Steuerbefehle, welche das Verfahren implementieren, auf den Agenten verteilt ausgeführt werden können. So können die Befehle zumindest teilweise redundant vorliegen und jeder Agent speichert und führt nur diejenigen Befehle aus, welche er zum Ablauf des Verfahrens benötigt. Eine zentrale Speichereinheit ist somit nicht notwendig. Dadurch dass der Code verteilt wird, kann er nicht einfach abgefälscht werden und das Verfahren ist insgesamt ausführungssicherer, da kein zentraler Server betrieben wird.

Gemäß einiger weiterer Aspekte der vorliegenden Erfindung zeichnet sich das Verfahren bzw. die intelligente Plattform dadurch aus, dass
- sie die Echtzeit Kommunikation zwischen verschiedenen Geräten unter Einsatz von Künstlicher Intelligenz ermöglicht;
- sie eine Kameraeinheit umfasst ,die Situation erfasst, bewertet und analysiert.
- die KI relevante Kommunikationspartner identifiziert und diesen spezifische Informationen, Anweisungen oder Lösung übermittelt;
- sie die Vernetzung und Interaktion von verschiedenen Geräten wie Drohnen, autonomen Fahrzeugen, Robotern und elektronischen Brillen ermöglicht;
- sie für den Einsatz in den Bereichen Militärstrategie, Industrieautomation, Robotik und Consumer-Anwendungen konzipiert ist;
- sie eine sichere und verlustfreie Datenübertragung ermöglicht;
- sie variabel implementiert und ausgestattet werden kann, im Hinblick auf spezifische Anwendungsgebiete und/ oder als Cloud basierte Lösung;
- mit Geodaten, Gesichtserkennung, visuelle Erkennung und Registrierinformation Agenten identifiziert werden können, also auch menschliche Agenten und/ oder maschinellen Agenten;
- MR und/ oder AR Brillen als Agenten agieren können;
- eine speziell entwickelte Kameraeinheit zur Erfüllung der spezifischen Anforderungen eingesetzt wird;
- sie konzipiert ist für die Bereiche Tourismus, Consumer und/ oder Social Apps und sie Information an Smartphones oder Fahrzeug Media Center übermitteln kann;
- stationäre und mobile Kamerasysteme Information an autonome Fahrzeuge übermitteln, beziehungsweise die Fahrzeuge untereinander Karten austauschen können;
- sie die Kommunikation und Interaktion zwischen allen Arten von Robotern, Drohnen, unbemannten Luftfahrzeugen, unbemannten Fahrzeugen und/ oder elektronischen Brillen ermöglicht;
- ein Kamerasystem optional ausgestattet mit einem angeschlossenen Werkzeugarm Reparaturbedarf erkennt und die Reparatur autonom durchführt basierend auf der Analyse und Entscheidungsfindung;
- die Kamera den Benutzer erkennt und identifiziert und der Zahlungstransfer direkt über das Kamerasystem und das Smartphone des Benutzers abgewickelt wird;
- sie Drohnen, unbemannten Luftfahrzeugen (UAVs) und Robotern, also generell Agenten, ermöglicht, sich gegenseitig an ihr jeweiliges technisches Niveau anzupassen. Dies beinhaltet die Fähigkeit, Software-Updates, Wissensdatenbanken und operationelle Algorithmen untereinander auszutauschen und zu synchronisieren, um ein einheitliches Leistungs- und Kompetenzniveau innerhalb der Gruppe zu erreichen. Durch diese Angleichung können alle beteiligten Geräte, bzw. Agenten, effektiv kommunizieren, koordinieren und zusammenarbeiten, unabhängig von individuellen Unterschieden in ihrer ursprünglichen Konfiguration oder ihrem Entwicklungszustand; und/ oder
- sie semiautomatisiert oder vollautomatisiert ausgeführt wird.

Die vorliegende Erfindung betrifft eine intelligente Kommunikationsplattform die Mithilfe von künstlicher Intelligenz die Kommunikation zwischen verschiedenen Geräten in Echtzeit ermöglicht. Die Plattform umfasst eine Kameraeinheit, die Situation erfasst, bewertet und analysiert, sowie eine leistungsstarke Kl, die in der Lage ist, relevante Kommunikationspartner zu identifizieren und diesen spezifische Information, Anweisung oder Lösungen zu übermitteln. Die Kommunikationsplattform ist für den Einsatz in den Bereichen die Militärstrategie, Industrieautomation, Robotik und Consumer Anwendungen konzipiert. Sie ermöglicht eine Vernetzung und Interaktion von verschiedenen Geräten, wie Drohnen, autonomen Fahrzeugen, Robotern und stationäre Kamerasystem, um die Effizienz und Genauigkeit von Arbeitsabläufen zu steigern. Zur Sammlung und Bewertung von Informationen und Situationen kommt eine Kameraeinheit zum Einsatz. Diese kann durch ihre Sensoren verschiedene Aspekte der Umgebung wahrnehmen -etwa Bewegungen, Helligkeitsveränderungen oder auch spezifische Formen und Muster. Dieses Informationsmaterial wird dann von der KI analysiert und in Form von Handlungsempfehlungen oder spezifischen Anweisungen weitergegeben. Die Plattform ermöglicht zudem eine Echtzeitverbindung unterschiedlicher Geräte sie alle können über die Plattform miteinander verbunden und koordiniert werden durch den Einsatz von verschlüsselten Kommunikationsprotokollen stellt die Plattform zudem sicher, dass die Übertragung von Daten sicher und ohne Verlust erfolgt. Die tatsächliche Implementierung und Ausstattung der Plattform kann je nach Anwendungsfall variieren. Sie kann spezifische Hardware-Komponenten enthalten, gezielt auf bestimmte Anwendungsbereiche abgestimmt sein oder auch als Cloud basierte Lösung umgesetzt werden, die maximale Skalierbarkeit und Flexibilität garantiert.

Im Folgenden werden einige Aspekte der vorliegenden Erfindung beschrieben:
Erkennung und Identifikation: Wenn ein registrierter Benutzer von einer der Kameras erkannt wird, identifiziert die KI-Plattform ihn anhand der gespeicherten Daten.

Informationsbereitstellung: Basierend auf dem Standort des Nutzers, seinen Präferenzen und eventuell dem aktuellen Kontext (z.B. Wetter, Tageszeit) sendet das System personalisierte Informationen direkt auf das Smartphone des Nutzers.

Interaktionstypen: Informationen können Hinweise auf nahegelegene touristische Attraktionen, Empfehlungen für Restaurants oder Events, Wegbeschreibungen, aktuelle Angebote in nahegelegenen Geschäften oder sogar Warnungen bei Notfällen in der Umgebung umfassen.

Echtzeitkommunikation. Die Plattform ermöglicht eine schnelle und präzise Kommunikation zwischen Geräten in Echtzeit, was zu einer effizienteren Zusammenarbeit führt.

Automatisierte Entscheidungsfindung: Die KI der Plattform ist in der Lage, relevante Kommunikationspartner für bestimmte Aufgaben auszuwählen und diesen gezielten Informationen oder Anweisungen zu übermitteln ohne menschliches Eingreifen.

Optimierung von Arbeitsabläufen. Durch die intelligente Kommunikation zwischen Geräten können Arbeitsabläufe optimiert Kommafehler minimiert und die Gesamtleistung gesteigert werden. Ein technischer Effekt der Erfindung liegt in der Einbindung von Kl -gestützten Kommunikationsmechanismen in die Interaktion zwischen verschiedenen Geräten. Durch die Integration einer Kameraeinheit zur Erfassung und Bewertung von Situationen sowie einer leistungsstarken Kl zur Identifizierung und Auswahl relevanter Kommunikationspartner.

Automatisierte Informationsübermittlung: die Kl ist in der Lage, automatisch relevante Informationen, Anweisungen oder Lösungen zu generieren und an die entsprechenden Geräte oder Benutzer zu übermitteln, ohne menschliches Eingreifen.

Echtzeit Entscheidungsfindung: durch die schnelle Auswertung von Situationen und die sofortige Kommunikation mit den relevanten Geräten in Echtzeit können Entscheidungen schnell getroffen und umgesetzt werden.

Adaptiv-Reaktion: die KI kann aufgrund fortlaufender Analysen und Lernprozesse adaptive Reaktionen anpassen und kontinuierlich verbessern, um den Anforderungen und Bedürfnissen der Benutzer gerecht zu werden. Insgesamt ermöglicht der technische Effekt der Erfindung eine intelligente und effektive Kommunikation zwischen Geräten in verschiedenen Anwendungen Anwendungsbereichen, die Effizienz, Genauigkeit und Leistungsfähigkeit der Arbeitsabläufe ist signifikant verbessert wird. Für die Implementierung der intelligenten Kommunikationsplattform können verschiedene Systeme und Protokolle genutzt werden, um eine nahtlose und effiziente Interaktion zwischen den Geräten zu gewährleisten Kommunikationssystem. Das Kommunikationssystem kann auf einen zuverlässigen und schnellen Netzwerkprotokoll wie TCP/IP basieren, um eine stabile und sichere Datenübertragung zwischen den Geräten zu gewährleisten. Alternativ kann ein spezielles lot-Kommunikationsprotokoll wie MQTT und die Datenübertragung in lot - Umgebung verwendet werden.

Datenanalyse und Verarbeitung: Zur Verarbeitung und Analyse der Daten sowie zur Implementierung von Maschine Learning-Algorithmen können Systeme wie Tensor Flow oder Py Torch verwendet werden, um eine leistungsstarke und effiziente KI Unterstützung zu bieten. Bildverarbeitung und Erkennung für die Bild Verarbeitung und Erkennung zur Erfassung von Situationen kann eine Open Source Bibliothek wie OpenCV genutzt werden, um die Kameraeinheit mit den erforderlichen Funktionen auszustatten.

Cloud Computing Plattform: Um die Rechenleistung für komplexe Datenanalysen und KI Berechnungen zu verbessern, kann die Plattform mit einem Cloud Computing Plattform wie AWS, Azure oder Google Cloud integriert werden, um eine Skalierbarkeit und Flexibilität zu gewährleisten.

Sicherheitsprotokolle: Um die Sicherheit der Kommunikation und der Daten zu gewährleisten, sollten geeignete Sicherheitsprotokolle wie SSL/TLS für die Verschlüsselung und Authentifizierung implementiert werden, um unbefugten Zugriff und all das zu verhindern.

Die vorliegende Erfindung betrifft zudem ein Verfahren zur automatisierten Herstellung eines Kommunikationskanals mittels einer Kamera, integriert in ein System, dass eine künstliche Intelligenz nutzt. Das System identifiziert Kommunikationspartner anhand hinterlegter Registrierinformationen und lokalisiert diese anhand von Geodaten und visuelle Erkennung. Die KI selektiert relevante Kommunikationspartner basierend auf definierten Kriterien die Aufgaben, technischen Know-how und Priorität. Anschließend instruierte KI die ausgewählten Partner durch Bereitstellung von Informationen, Anweisung und Steuerbefehlen.

Gemäß der vorliegenden Erfindung werden die Begriffe, Maschine, Roboter, humanoide Roboter, Drohne, Fahrzeug, Brille, Kamera, Smartphone, Arm, Smartwatches, elektronische Armbänder (...) als Agenten bezeichnet. Die Plattform beschreibt das beanspruchte Verfahren. Das Verfahren kann die beschriebene KI (künstliche Intelligenz) verwenden, wobei die KI als Synonym für neuronales Netz verstanden werden kann. Die Kommunikation zwischen den Agenten kann sprachbasiert sein, insbesondere unter Verwendung natürlicher Sprache.

Gemäß einem Aspekt der vorliegenden Erfindung werden in einem vorbereitendem Verfahrensschritt Agenten bereitgestellt, welche Steuerbefehle zur Durchführung des Verfahrens ausführen. Dies hat den Vorteil, dass initial Agenten mit den erforderlichen Informationen bereitgestellt werden, welche sodann das Verfahren ausführen und sodann weitere Agenten nach Bedarf hinzuziehen. Auf diese Weise kann die Schwarmintelligenz ausgenutzt werden und es wurden potentiell unterschiedliche Winkel eines optisch zu erfassenden Objekts aufgenommen.

Gemäß einem weiteren Aspekt der vorliegenden Erfindung werden Steuerbefehle zur Durchführung des Verfahrens auf mehrere Agenten verteilt zur Ausführung gebracht. Dies hat den Vorteil, dass keine zentrale Steuerungseinheit notwendig ist und die Befehle verteilt abgespeichert und ausgeführt werden können. Somit kann auch die Datenhaltung dezentral und optional redundant erfolgen.

Gemäß einem weiteren Aspekt der vorliegenden Erfindung agieren zur Durchführung des Verfahrens die Agenten insgesamt autonom ohne zentrale Steuereinheit. Dies hat den Vorteil, dass eine Fehlerrobustheit dadurch entsteht, dass keine zentrale Einheit angreifbar ist und auch durch die Verteilung eine Ausfallsicherheit gewährleistet wird.

Gemäß einem weiteren Aspekt der vorliegenden Erfindung werden die potentiell ausführenden Agenten abgespeichert und/ oder mittels einer optischen Information von mindestens einem weiteren Agent erkannt. Dies hat den Vorteil, dass Kontaktmöglichkeiten, wie eine Netzwerkadresse oder dergleichen vorliegen und bereits Aussagen über die Fähigkeiten der Agenten abgespeichert werden können. Anhand der Information können Agenten Teilaufgaben zugewiesen werden. Die weiteren Agenten können auch im Feld optisch erkannt werden und anhand der optischen Information koordiniert, das heißt mit weiteren Teilaufgaben beauftragt, werden.

Gemäß einem weiteren Aspekt der vorliegenden Erfindung ist für jeden Agenten mindestens ein Kommunikationskanal hinterlegt, welcher zur Kommunikation verwendet wird und bei einem fehlgeschlagenem Kommunikationsversuch der Agent nicht weiter berücksichtigt wird. Dies hat den Vorteil, dass alternative Kontaktmöglichkeiten oder Kommunikationsmedien hinterlegt werden können. Somit können die Agenten sichere Verbindungen, bevorzugt Punkt zu Punkt, aufbauen. Sollte nach einer vorgegebenen Zeitspanne von einem angefragten Agent keine Antwort kommen so kann ein alternativer Agent beauftragt werden.

Gemäß einem weiteren Aspekt der vorliegenden Erfindung wird das Verfahren unter Verwendung mindestens eines neuronalen Netzes ausgeführt. Dies hat den Vorteil, dass die Auswahl der Agenten und die Verteilung der Teilaufgaben mittels KI erfolgen kann und abgeschlossene Problemlösungen zum Training der Daten verwendet werden können. Somit entsteht ein selbstlernendes und sich verbesserndes System.

Gemäß einem weiteren Aspekt der vorliegenden Erfindung wird das Aufgabenprofil in Teilaufgaben mit Auswahlkriterien heruntergebrochen, wobei eine vordefinierte Metrik und/ oder ein neuronales Netz verwendet wird. Dies hat den Vorteil, dass die Aufgaben solange in Teilaufgaben zerlegt werden können, bis sich ein geeigneter Agent gefunden hat. Es können vergangene Lösungen zu Rate gezogen werden, welche bereits vergleichbare Probleme gelöst haben oder es können mittels Sprachanalyse die Probleme zerlegt werden. Dies kann zum Beispiel durch eine Taxonomie erfolgen, die einen Begriff in Teilbegriffe zerlegt.

Gemäß einem weiteren Aspekt der vorliegenden Erfindung werden die Auswahlkriterien und/ oder die Auswahlinformation optisch ausgelesen, gemessen, mittels einer Schnittstelle ausgelesen und/ oder empirisch ermittelt. Dies hat den Vorteil, dass Agenten mitsamt deren Fähigkeiten automatisch erkannt werden können. So kann festgestellt werden, um welche Art von Agent es sich handelt und daraus dessen Fähigkeiten abgeleitet werden. Die Informationen können auch über eine Schnittstelle, bevorzugt eine Luftschnittstelle, ausgelesen werden.

Gemäß einem weiteren Aspekt der vorliegenden Erfindung werden potentiell ausführende Agenten anhand einer Bilderkennung, eines optischen Codes, einer Mustererkennung und/ oder unter Verwendung eines bildverarbeitenden Verfahrens erkannt. Dies hat den Vorteil, dass mittels eines vordefinierten Codes Agenten erkannt werden können und anhand der Information kann festgestellt werden, welche Fähigkeiten der Agent aufweist. Auch können Bilder der Agenten hinterlegt werden, welche zur Laufzeit vergleichen werden und anhand eines Grades der Übereinstimmung kann der Agent einem bekannten Agent zugeordnet werden.

Gemäß einem weiteren Aspekt der vorliegenden Erfindung erfolgt das optische Erfassen durch mindestens einen optischen Sensor mindestens eines Agenten. Dies hat den Vorteil, dass auch mehrere Agenten zusammenarbeiten können und unterschiedlichen Perspektiven Erfassen können.

Gemäß einem weiteren Aspekt der vorliegenden Erfindung erfolgt das Auswählen der auszuführenden Agenten anhand einer Metrik, welche bestimmt, welcher Agent die Teilaufgabe besonders trefflich ausführen kann. Dies hat den Vorteil, dass eine Zuordnung bereitgestellt werden kann, welche angibt, für welche Aufgabe welche Fähigkeit verlangt wird. Hier kann auch eine Gewichtung vorgenommen werden, so dass immer der am besten passende Agent ausgewählt wird.

Gemäß einem weiteren Aspekt der vorliegenden Erfindung weist eine Registrierungsinformation mindestens ein Bild, mindestens ein Muster, eine Information eines Nummernschilds, ein Gesichtsmerkmal, biometrische Daten und/oder mindestens eine visuelle Benutzererkennung auf. Dies hat den Vorteil, dass ein Abgleich der vorhandenen Kommunikationspartner mit einem hinterlegten Bild erfolgen kann. Bei einer ausreichenden Übereinstimmung wird sodann angenommen, dass sich der Agent auf dem hinterlegten Bild tatsächlich in dem erfassten Echtzeitbild befindet. Handelt es sich bei einem Kommunikationspartner nicht um einen Menschen, so kann auch ein Muster hinterlegt werden, welches mittels Bilderkennung besonders einfach erfasst werden kann. Auch können Teile oder ein komplettes Nummernschild optisch hinterlegt werden, so dass hierzu ein Auto als Kommunikationspartner ausgewählt werden kann. Möchte man beispielsweise einen Warnhinweis übersenden, so kann ein Fahrer als Registrierungsinformation textuell seine Nummernschildinformation eingeben und sodann können weitere Fahrer genau dieses Auto auswählen und der Fahrer dieses Autos erhält einen Warnhinweis auf seinem Display.

Gemäß am weiteren Aspekt der vorliegenden Erfindung umfasst die Mehrzahl an Kommunikationskanälen einen Audiokanal, einen Videokanal und/oder einen textuellen Kommunikationskanal. Dies hat den Vorteil, dass der Agent aus mehreren Formaten auswählen kann und somit den geeigneten Kommunikationskanal einstellen kann. Bei einem Kommunikationskanal kann es sich um ein textuelles Gespräch, also einen Chat, oder einen audiovisuellen Nachrichtenaustausch handeln.

Gemäß einem weiteren Aspekt der vorliegenden Erfindung umfasst die Endgerätekennung bzw. Agentenerkennung eine Adresse, eine Telefonnummer, , Kontaktdaten und/oder eine alphanumerische Zeichenkette. Dies hat den Vorteil, dass das Endgerät auf unterschiedliche Art und Weise angesprochen werden kann und zudem können auch unterschiedliche Endgerätekennungen vorliegen. So kann neben einer Telefonnummer auch eine Adresse für eine Videokommunikation hinterlegt werden. Der Agent kann sodann auswählen, wie der Kommunikationskanal zustande kommen soll.

Gemäß einem weiteren Aspekt der vorliegenden Erfindung erfolgt die Benutzereingabe des mobilen Endgeräts mittels eines Berührens einer berührungsempfindlichen Wiedergabeeinheit und/oder mittels einer Spracheingabe. Dies hat den Vorteil, dass der Benutzer entweder auf seinem Display seinen Kommunikationspartner auswählen kann oder er kann in einem Auto eine Spracheingabe absetzen und sodann kann er sagen welcher der Kommunikationspartner gewählt werden soll.

Gemäß einem weiteren Aspekt der vorliegenden Erfindung liegt das mobile Endgerät des Benutzers als ein Telefon, eine elektronische Brille mit Benutzerschnittstelle und/oder ein Head-up-Display vor. Dies hat den Vorteil, dass unterschiedliche Hardware verwendet werden kann. So kann beispielsweise ein Benutzer eine elektronische Brille verwenden, welche Informationen in das Brillenglas einblenden kann. So erhält der Benutzer unterschiedliche Information bezüglich der Kommunikationspartner, welche ihn umgeben. Mittels einer weiteren Information kann dargestellt werden, welche Kommunikationspartner registriert sind. Darüber hinaus ist es oftmals möglich in ein Display innerhalb einer Brille ein Kamerabild einzublenden, welches sodann die Kommunikationspartner in der gewünschten Anzahl heran zoomt bzw. heraus zoomt.

Gemäß einem weiteren Aspekt der vorliegenden Erfindung wird der Kommunikationskanal unter Verwendung von Bluetooth, WLAN, einer Luftschnittstelle eines Mobilfunknetzes, einer Punkt zu Punkt Verbindung und/oder einer Telefonverbindung hergestellt. Dies hat den Vorteil, dass unterschiedliche Kommunikationstechniken Einsatz finden können und bei einem Ausfall einer ersten Kommunikationstechnik eine zweite Kommunikationstechnik verwendet wird. Auch können diese Techniken priorisiert werden und bei einem Ausfall einer verwendeten hoch priorisierten Technik, wird eine nachrangige Technik automatisch hinzugeschaltet.

Damit die Agenten erfasst werden, erfolgt ein stetiges Auslesen mindestens eines bildgebenden Sensors zum Erfassen einer Mehrzahl potentieller Kommunikationspartner. Die Kamera des mobilen Endgeräts wird also aktiviert und erfasst stetig ein Bild. Hierbei ist es auch möglich mehrere Kameras zu verwenden, deren Bild kombiniert wird. Mittels einer Bilderkennung kann sodann festgestellt werden, wie viele Agenten bzw. Objekte sich auf dem jeweiligen Bild befinden. Der Benutzer richtet die Kamera aus und erfasst somit unterschiedliche Anzahlen von Kommunikationspartnern. Diese sind in diesem Schritt noch potentielle Kommunikationspartner. Das Bild der Kamera ist also eine stetige Abfolge von Einzelbildern, die analysiert wird.

Vorab hat der Benutzer eine Anzahl potentieller Kommunikationspartner hinterlegt und genau diese Anzahl wird sodann angezeigt. Hierzu stellt das vorgeschlagene Verfahren selbsttätig, den Vergrößerungsfaktor, die Brennweite bzw. den Zoom des bildgebenden Sensors ein.

Konkret ist es also möglich, dass der Benutzer fünf potentielle Kommunikationspartner vorab spezifiziert hat, wobei der Agent lediglich die Anzahl spezifiziert. Hält der Agent nunmehr seine Kamera auf eine Agentengruppe von zehn Agenten, so wird das Bild derart angepasst, dass sich lediglich nur noch fünf Agenten in dem Bild befinden. Aufgrund der Abmessungen eines Bildschirms eines Smartphones ist es typischerweise nicht möglich die Zahl der potentiellen Kommunikationspartner höher als zehn zu setzen.

Erfindungsgemäß hat sich gezeigt, dass sich zum Einsatz im vorliegenden Verfahren eine Zahl potentieller Kommunikationspartner von 3 bis 100 eignet. Somit wird also bei der Ansteuerung der Kamera bzw. des einen oder der mehreren Sensoren die Bildschirmabmessung bevorzugt mit berücksichtigt mitberücksichtigt.

Wird die Anzahl potentieller Kommunikationspartner angezeigt und bewegt der Agent seine Kamera, so wird wieder in den Schritt des stetigen Auslesens verzweigt und es erfolgt erneut ein Einstellen des Bildausschnitts bzw. des Zoom - Faktors, des Vergrößerungsfaktors bzw. der Brennweite. Werden beispielsweise nur drei anstatt der gewünschten fünf potentiellen Kommunikationspartner angezeigt, so wird herausgezoomt, bis eine Anzahl von fünf potentiellen Kommunikationspartnern angezeigt wird.

Die Registrierungsinformation kann auch Merkmale über den potentiellen Kommunikationspartner aufweisen. Beispielsweise können mittels der Registrierungsinformation Daten über den Kommunikationspartner eingegeben werden. So sind mögliche Teile der Registrierungsinformation eine Ortskennung eines potentiellen Kommunikationspartners. Somit kann jemand angeben, dass er kontaktiert werden will, aber nur von Agenten, die ein Nummernschild aufweisen, das der eigenen Stadt entspricht. Die Registrierungsinformation kann also eine Information beinhalten, dass der Agent nur mit Agenten aus einer bestimmten Stadt kommunizieren will. Der entsprechende Dienst ist beliebig zu erweitern und beispielsweise können Agenten auch einstellen, dass ihnen nur potentielle Kommunikationspartner mit einem bestimmten Beziehungsstatus angezeigt werden. Auf diese Art und Weise ist es technisch einfach mit anderen Agenten in Kontakt zu treten, auch wenn nur ein begrenzter Bildschirmplatz zur Verfügung steht. Durch die Einstellung der bildgebenden Sensoren wird sichergestellt, dass nur potentielle Kommunikationspartner bis zu einer gewissen Anzahl eingeblendet werden.

Besonders vorteilhaft ist hierbei, dass die möglichen Kommunikationspartner automatisiert erkannt werden und sodann eben auch automatisiert die Kamera eingestellt werden kann. Somit erfolgt also ein Anzeigen potentieller Kommunikationspartnern völlig ohne Eingabe des Benutzers. Dieser muss lediglich sein Mobilfunkgerät entsprechend ausrichten und sodann wird ihm ein geeignetes Bild mit Kommunikationspartnern angezeigt. Lediglich die Auswahl, mit welchem potentiellen Kommunikationspartner der Benutzer in Verbindung treten will ob liegt letztendlich dem Benutzer.

Sodann erfolgt ein Freischalten einer Auswahl an Kommunikationspartnern mittels einer bereitgestellten Registrierungsinformation. Werden beispielsweise fünf Leute als potentielle Kommunikationspartner angezeigt, haben sich jedoch nur drei Agenten für den zu Grunde liegenden Dienst registriert, so werden eben nur diese drei Agenten freigeschaltet. Ein Freischalten heißt hierbei ein Aktivieren zur Erstellung eines Kommunikationskanals. Mit diesen freigeschalteten Agenten bzw. Objekten kann also ein Kommunikationskanal hergestellt werden. Auch ist es möglich, dass die Anzahl potentieller Kommunikationspartner derart beschränkt wird, dass nur freigeschaltete, also registrierte Agenten bzw. Objekte, angezeigt werden. Werden beispielsweise fünf Kommunikationspartner angezeigt, es haben sich jedoch nur drei Agenten registriert, so wird der Zoomfaktor derart eingestellt, dass sich mindestens fünf freigeschaltete bzw. registrierte Kommunikationspartner in dem zu verarbeitenden Bild befinden.

Die Registrierungsinformation kann derart bereitgestellt werden, dass auf einem entfernten Server Benutzerdaten hinterlegt werden, welche angeben, welcher Agent bzw. welches Objekt kontaktiert werden will. Hierzu können auch Kontaktinformationen hinterlegt werden. So kann sich ein Agent mit einem Foto registrieren und kann sodann eine Adresse zur Einstellung eines Videokanals hinterlegen.

Der potentielle Kommunikationspartner kann somit hinterlegen, welchen Kommunikationskanal er nutzen möchte. Beispielsweise kann auch eine Telefonnummer hinterlegt werden oder alternativ ein Textdienst, der genutzt wird. Dem Benutzer, welcher das vorgeschlagene Verfahren ausführt, wird dann angezeigt, dass mit einem potentiellen Kommunikationspartner ein Telefonat oder ein Textgespräch, bzw. Chat, möglich ist. Bei dem potentiellen Kommunikationspartner kann es sich um einen Agent handeln, welche sodann mittels ihres hinterlegten Endgeräts angesprochen wird.

Das Verfahren ist generell Computer implementiert, wobei das Ausführen der Aufgaben bzw. Teilaufgaben realweltlich, das heißt mit physikalischer Interaktion, erfolgt. Dies schließt nicht aus, dass einige Aufgaben bzw. Teilaufgaben auch virtuell bzw. softwaretechnisch umgesetzt werden.

Die Aufgabe wird auch gelöst durch eine Systemanordnung zum verteilten und kooperativen Problemlösen im realweltlichem Raum durch autonome Agenten mit automatisierten Einrichtungen von Kommunikationskanälen, aufweisend eine Schnittstelleneinheit eingerichtet zum Bereitstellen eines realweltlichen Aufgabenprofils; eine Identifizierungseinheit eingerichtet zum Identifizieren von potentiell ausführenden Agenten anhand jeweils derer Registrierungsinformation und/ oder mittels eines stetigen Auslesens von bildgebenden Sensoren durch bekannte ausführende Agenten; eine Abgleicheinheit eingerichtet zum Abgleichen der identifizierten, potentiell ausführenden Agenten mit dem bereitgestellten Aufgabenprofil, wobei das Aufgabenprofil in Teilaufgaben mit Auswahlkriterien heruntergebrochen wird und die Agenten Auswahlinformation bezüglich der Auswahlkriterien über einen Kommunikationskanal bereitstellen; eine Auswahleinheit eingerichtet zum Auswählen von auszuführenden Agenten anhand des Abgleichs der Auswahlkriterien und bereitgestellter Auswahlinformation; eine Zuweisungseinheit eingerichtet zum Zuweisen der jeweiligen Teilaufgabe an jeweils einen auszuführenden Agenten über den Kommunikationskanal; mindestens eine Sensoreinheit eingerichtet zum optischen Erfassen eines Ergebnisses nach dem Ausführen der jeweiligen Teilaufgabe durch mindestens einen Agenten; und eine Adaptionseinheit eingerichtet zum Angleichen des realweltlichen Aufgabenprofils in Abhängigkeit des erfassten Ergebnisses.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens zum verteilten und kooperativen Problemlösen gemäß einem Aspekt der vorliegenden Erfindung;
- Figur 2:: ein weiteres schematisches Ablaufdiagramm des vorgeschlagenen Verfahrens zum verteilten und kooperativen Problemlösen gemäß einem weiteren Aspekt der vorliegenden Erfindung;
- Figur 3:: ein weiteres schematisches Ablaufdiagramm des vorgeschlagenen Verfahrens zum verteilten und kooperativen Problemlösen gemäß einem weiteren Aspekt der vorliegenden Erfindung;
- Figur 4:: ein weiteres schematisches Ablaufdiagramm des vorgeschlagenen Verfahrens zum verteilten und kooperativen Problemlösen gemäß einem weiteren Aspekt der vorliegenden Erfindung, welches die Agentenauswahl verdeutlicht; und
- Figur 5:: ein weiteres schematisches Ablaufdiagramm des vorgeschlagenen Verfahrens zum verteilten und kooperativen Problemlösen gemäß einem weiteren Aspekt der vorliegenden Erfindung, welches die Auswahlkriterien verdeutlicht.

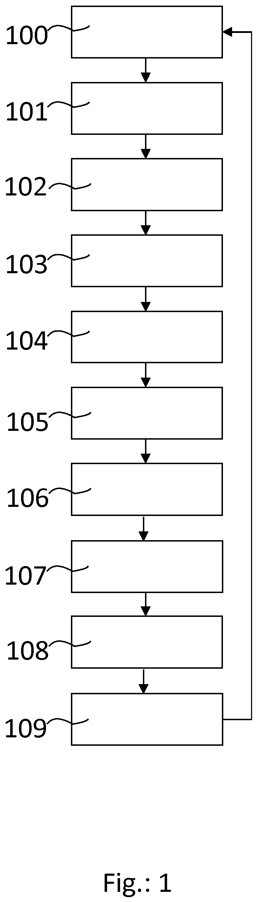

Figur 1 zeigt in einem schematischen Ablaufdiagramm ein Verfahren zum verteilten und kooperativen Problemlösen im realweltlichem Raum durch autonome Agenten mit automatisierten Einrichtungen von Kommunikationskanälen, aufweisend ein Bereitstellen 100 eines realweltlichen Aufgabenprofils; ein Identifizieren 101 von potentiell ausführenden Agenten anhand jeweils derer Registrierungsinformation und/ oder mittels eines stetigen Auslesens von bildgebenden Sensoren durch bekannte ausführende Agenten; ein Abgleichen 102 der identifizierten 101, potentiell ausführenden Agenten mit dem bereitgestellten Aufgabenprofil, wobei das Aufgabenprofil in Teilaufgaben mit Auswahlkriterien heruntergebrochen wird 103 und die Agenten Auswahlinformation bezüglich der Auswahlkriterien über einen Kommunikationskanal bereitstellen 104; ein Auswählen 105 von auszuführenden Agenten anhand des Abgleichs der Auswahlkriterien und bereitgestellter Auswahlinformation; ein Zuweisen 106 der jeweiligen Teilaufgabe an jeweils einen auszuführenden Agenten über den Kommunikationskanal; ein optisches Erfassen 108 eines Ergebnisses nach dem Ausführen 107 der jeweiligen Teilaufgabe durch mindestens einen Agenten; und ein Angleichen 109 des realweltlichen Aufgabenprofils in Abhängigkeit des erfassten Ergebnisses.

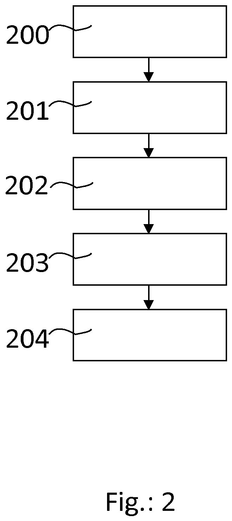

Figur 2 zeigt ein weiteres schematisches Ablaufdiagramm des vorgeschlagenen Verfahrens zum verteilten und kooperativen Problemlösen gemäß einem weiteren Aspekt der vorliegenden Erfindung. Die einzelnen Verfahrensschritte werden wie folgt beschrieben:
Verfahrensschritt 200: ein optisches Erfassen der aktuellen Situation durch einen oder mehrere Agenten;
Verfahrensschritt 201: eine Signalverarbeitung nachdem alle Daten gesichtet wurden;
Verfahrensschritt 202: es erfolgt eine Datenanalyse, die die Aufgaben aufteilt und verfügbare Agenten mitsamt deren Fähigkeiten analysiert;
Verfahrensschritt 203: es wird aufgrund der Daten ausgewählt, welche Agenten welche Aufgabe bzw. Teilaufgabe ausführen sollen; und
Verfahrensschritt 204: die einzelnen Agenten erfüllen jeweils ihre Aufgabe und lösen somit das gestellte Problem bzw. die Aufgabe im Kollektiv.

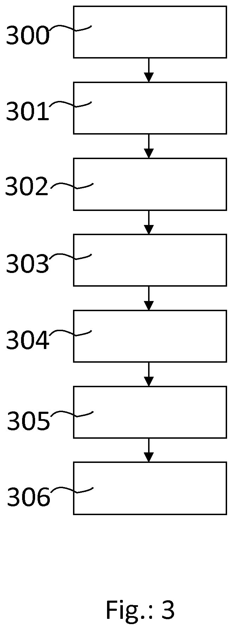

Figur 3 zeigt ein weiteres schematisches Ablaufdiagramm des vorgeschlagenen Verfahrens zum verteilten und kooperativen Problemlösen gemäß einem weiteren Aspekt der vorliegenden Erfindung. Die einzelnen Verfahrensschritte werden wie folgt beschrieben:
Verfahrensschritt 300: KI gestützte Kommunikationsmechanismen werden verwendet um einen Kommunikationskanal mit Agenten herzustellen;
Verfahrensschritt 301: eine oder mehrere Kameraeinheiten von Agenten erfassen die aktuelle Situation der zu lösenden Aufgabe und weitere Agenten werden erfasst;
Verfahrensschritt 302: eine leitungsstarke Kl wertet die Daten aus erfasst Randbedingungen und Zusatzdaten;
Verfahrensschritt 303: es erfolgt eine automatisierte Informationsübermittlung an entscheidende Agenten;
Verfahrensschritt 304: es erfolgt eine Entscheidungsfindung in Echtzeit, zum Beispiel durch Aushandeln oder Mehrheitsabstimmung der entscheidenden Agenten;
Verfahrensschritt 305: es erfolgt eine Optimierung von Arbeitsprozessen mit einer Beauftragung der einzelnen Agenten, die ihre Aufgabe durchführen; und
Verfahrensschritt 306: das Ergebnis wird begutachtet und die Aufgaben ggf. angepasst damit eine neue Iteration des Prozesses starten kann.

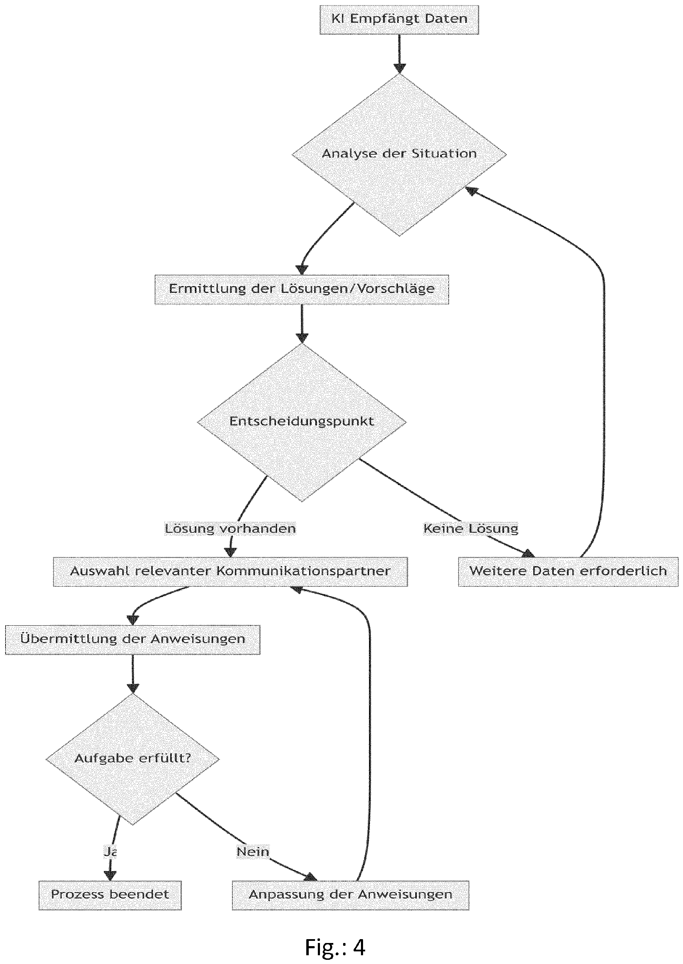

Figur 4 zeigt ein weiteres schematisches Ablaufdiagramm des vorgeschlagenen Verfahrens zum verteilten und kooperativen Problemlösen gemäß einem weiteren Aspekt der vorliegenden Erfindung, welches die Agentenauswahl verdeutlicht. Das Flussdiagramm beschreibt einen detaillierten und methodischen Prozess, in dem eine Künstliche Intelligenz (KI) zur Analyse von Situationen, zur Ermittlung von Lösungsvorschlägen und zur Entscheidungsfindung verwendet wird. Dieser Prozess ist nicht nur für das Verständnis der Funktionsweise von KI-Anwendungen nützlich, sondern auch um zu verstehen, wie KI in praktischen Szenarien zur Problemlösung beitragen kann. Es folgt eine ausführlichere Beschreibung der einzelnen Schritte:
KI empfängt Daten: Der Prozess beginnt damit, dass die KI-Daten aus verschiedenen Quellen erhält. Diese Daten können in Form von Nutzereingaben, Sensordaten, Datenbankinformationen oder anderen Formaten vorliegen. An diesem Punkt ist die Qualität und Relevanz der Daten von entscheidender Bedeutung, da sie die Grundlage für alle nachfolgenden Analysen und Entscheidungen bilden.

Analyse der Situation: Nachdem die KI die Daten erhalten hat, beginnt sie mit der Analyse. Diese Analyse umfasst die Bewertung der Daten im Kontext der zu lösenden Aufgabe oder des Problems. Die KI verwendet Algorithmen des maschinellen Lernens, um Muster zu erkennen, Zusammenhänge zu verstehen und Einsichten zu gewinnen, die für die Situation relevant sind.

Ermittlung der Lösungen/Vorschläge: Auf Basis der Situationsanalyse ermittelt die KI potenzielle Lösungen oder Handlungsvorschläge. Dieser Schritt erfordert oft den Einsatz von komplexen Algorithmen, die in der Lage sind, aus den vorhandenen Daten Schlüsse zu ziehen und kreative Lösungsansätze zu generieren.

Entscheidungspunkt: An diesem kritischen Punkt im Prozess muss entschieden werden, ob eine geeignete Lösung gefunden wurde.

Lösung vorhanden: Wenn die KI eine praktikable Lösung identifiziert hat, geht der Prozess weiter zur Kommunikation dieser Lösung.

Keine Lösung: Falls keine passende Lösung vorhanden ist, erkennt die Kl, dass weitere Daten benötigt werden, um eine fundierte Entscheidung treffen zu können. Dies leitet einen Zyklus der Datensammlung ein, wonach der Prozess der Analyse und Lösungssuche erneut durchlaufen wird.

Auswahl relevanter Kommunikationspartner: Nachdem eine Lösung gefunden wurde, wählt die KI die relevanten Agenten aus, mit denen die Lösung geteilt oder die notwendigen Aktionen durchgeführt werden sollen. Die Auswahl der Kommunikationspartner hängt von der Art der Lösung und den beteiligten Akteuren ab.

Übermittlung der Anweisungen: Die ausgewählten Anweisungen oder Lösungen werden dann an die identifizierten Stakeholder übermittelt. Dies kann in Form von automatisierten Aktionen, Benachrichtigungen oder Berichten erfolgen, je nach Anwendungsbereich der Kl.

Aufgabe erfüllt?: Schließlich wird evaluiert, ob die ergriffenen Maßnahmen zur Lösung des Problems geführt haben.

Ja: Wenn das Ziel erreicht wurde, ist der Prozess erfolgreich abgeschlossen.

Nein: Sollte das Problem weiterhin bestehen oder die Lösung nicht den gewünschten Effekt erzielt haben, geht der Prozess in eine Phase der Anpassung über. Hierbei werden die Anweisungen basierend auf dem erhaltenen Feedback und weiteren Analysen modifiziert, um eine verbesserte Lösung zu finden. Der Zyklus aus Bewertung und Anpassung wird so lange wiederholt, bis die Aufgabe zur Zufriedenheit erfüllt ist.

Dieser iterative Prozess ermöglicht es der Kl, sich flexibel an neue Informationen anzupassen und Lösungen kontinuierlich zu optimieren. Es ist ein Beispiel dafür, wie Kl-Systeme in der Lage sind, komplexe Probleme durch die Kombination von Datenanalyse, kreativer Problemlösung und adaptivem Lernen zu bewältigen.

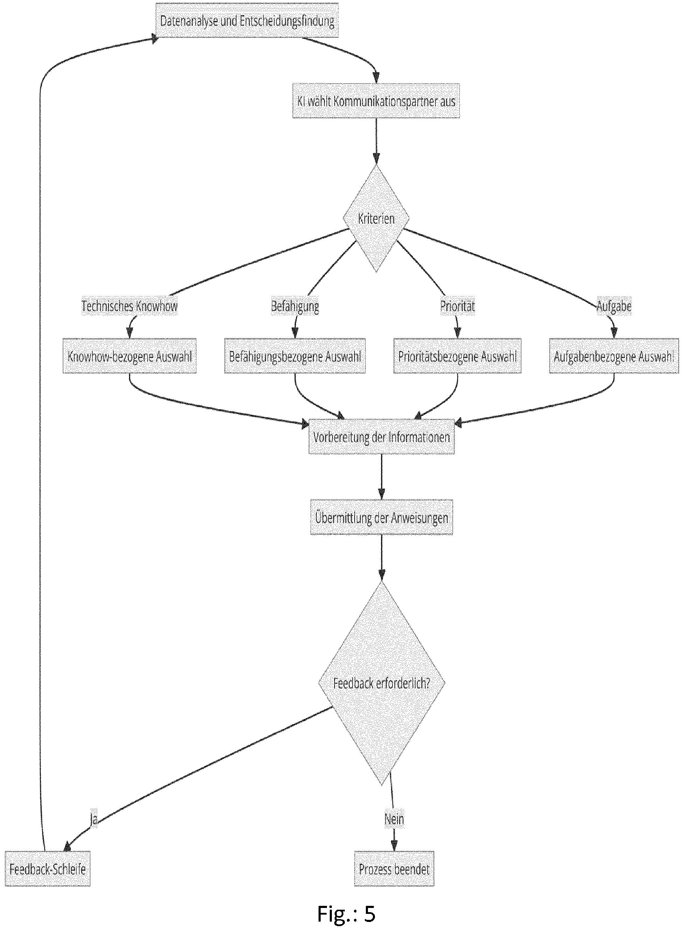

Figur 5 zeigt ein weiteres schematisches Ablaufdiagramm des vorgeschlagenen Verfahrens zum verteilten und kooperativen Problemlösen gemäß einem weiteren Aspekt der vorliegenden Erfindung, welches die Auswahlkriterien verdeutlicht. Das Flussdiagramm zeigt einen komplexen Entscheidungsfindungsprozess, der von einer künstlichen Intelligenz (KI) durchgeführt wird. Es besteht aus mehreren Schritten und Entscheidungspunkten, die auf Kriterien basieren. Hier ist eine ausführliche Beschreibung des Prozesses:
Datenanalyse und Entscheidungsfindung: Die Kl beginnt mit der Sammlung und Analyse von Daten. Diese Phase ist entscheidend, um ein umfassendes Verständnis der Situation zu gewinnen, auf dessen Grundlage Entscheidungen getroffen werden können.

KI wählt Kommunikationspartner bzw. Agenten aus: Nachdem die Daten analysiert wurden, wählt die KI die Kommunikationspartner aus, die für die jeweilige Situation relevant sind. Dieser Schritt ist in mehrere Unterabschnitte gegliedert, die auf bestimmten Kriterien basieren:
Technisches Know-how: Hier trifft die KI eine Auswahl basierend auf dem technischen Verständnis oder der Expertise, die für das Problem oder die Aufgabe notwendig ist.

Befähigung: In diesem Zweig des Diagramms wird eine Auswahl getroffen, die sich auf die Fähigkeiten und die Eignung der möglichen Kommunikationspartner bzw. Agenten konzentriert.

Priorität: Dieser Pfad priorisiert die Partnerwahl nach der Dringlichkeit der Aufgabe oder des Problems. Es können auch Agenten bzw. Typen von Agenten priorisiert werden.

Aufgabe: Hier werden die Kommunikationspartner basierend auf ihrer Relevanz oder Zuständigkeit für die spezifische Aufgabe ausgewählt.

Vorbereitung der Informationen: Nach der Auswahl der Kommunikationspartner bereitet die KI die notwendigen Informationen vor, die übermittelt werden sollen. Dies beinhaltet das Zusammenstellen von Anweisungen, Erklärungen oder Lösungen, die auf die Situation zugeschnitten sind.

Übermittlung der Anweisungen: Die sorgfältig vorbereiteten Informationen werden dann an die ausgewählten Kommunikationspartner übermittelt. Dieser Schritt ist kritisch, da er die Art und Weise bestimmt, wie die Lösung kommuniziert und umgesetzt wird.

Feedback erforderlich?: Nach der Übermittlung der Anweisungen bewertet die Kl, ob ein Feedback erforderlich ist. Das kann bedeuten, dass sie auf eine Rückmeldung wartet, um zu überprüfen, ob die Lösung angenommen wurde oder ob Anpassungen erforderlich sind.

Ja: Wenn Feedback erforderlich ist, geht der Prozess in eine Feedback-Schleife über. Hier wird das erhaltene Feedback analysiert und die KI passt ihre Anweisungen entsprechend an. Dies könnte bedeuten, zurückzugehen und Informationen neu zu bewerten, zusätzliche Daten zu sammeln oder die Kommunikationsstrategie zu ändern. Dieser Schritt stellt sicher, dass der Ansatz iterativ und reaktionsfähig ist.

Nein: Wenn kein Feedback notwendig ist, weil die Aufgabe als erfüllt gilt, endet der Prozess.

Das Flussdiagramm illustriert einen zyklischen und anpassungsfähigen Entscheidungsprozess, der die Bedeutung der richtigen Auswahl und Vorbereitung von Informationen hervorhebt, sowie die Notwendigkeit von Feedback zur Optimierung der Lösungsfindung.

## Patentansprüche

1. Verfahren zum verteilten und kooperativen Problemlösen im realweltlichem Raum durch autonome, maschinelle Agenten mit automatisierten Einrichtungen von Kommunikationskanälen, aufweisend:
- ein Bereitstellen (100) eines realweltlichen Aufgabenprofils;
- ein Identifizieren (101) von potentiell ausführenden Agenten anhand jeweils derer Registrierungsinformation und/ oder mittels eines stetigen Auslesens von bildgebenden Sensoren durch bekannte ausführende Agenten;
- ein Abgleichen (102) der identifizierten (101), potentiell ausführenden Agenten mit dem bereitgestellten Aufgabenprofil, wobei das Aufgabenprofil in Teilaufgaben mit Auswahlkriterien heruntergebrochen wird (103) und die Agenten Auswahlinformation bezüglich der Auswahlkriterien über einen Kommunikationskanal bereitstellen (104);
- ein Auswählen (105) von auszuführenden Agenten anhand des Abgleichs der Auswahlkriterien und bereitgestellter Auswahlinformation;
- ein Zuweisen (106) der jeweiligen Teilaufgabe an jeweils einen auszuführenden Agenten über den Kommunikationskanal;
- ein optisches Erfassen (108) eines Ergebnisses nach dem Ausführen (107) der jeweiligen Teilaufgabe durch mindestens einen Agenten; und
- ein Angleichen (109) des realweltlichen Aufgabenprofils in Abhängigkeit des erfassten Ergebnisses.

2. Verfahren nach Anspruch 1, **dadurch gekennzeichnet, dass** in einem vorbereitendem Verfahrensschritt Agenten bereitgestellt werden, welche Steuerbefehle zur Durchführung des Verfahrens ausführen.

3. Verfahren nach Anspruch 1 oder 2, **dadurch gekennzeichnet, dass** Steuerbefehle zur Durchführung des Verfahrens auf mehrere Agenten verteilt zur Ausführung gebracht werden.

4. Verfahren nach einem der vorhergehenden Ansprüche, **dadurch gekennzeichnet, dass** zur Durchführung des Verfahrens die Agenten insgesamt autonom ohne zentrale Steuereinheit agieren.

5. Verfahren nach einem der vorhergehenden Ansprüche, **dadurch gekennzeichnet, dass** die potentiell ausführenden Agenten abgespeichert werden und/ oder mittels einer optischen Information von mindestens einem weiteren Agent erkannt werden.

6. Verfahren nach einem der vorhergehenden Ansprüche, **dadurch gekennzeichnet, dass** für jeden Agenten mindestens ein Kommunikationskanal hinterlegt ist, welcher zur Kommunikation verwendet wird und bei einem fehlgeschlagenem Kommunikationsversuch der Agent nicht weiter berücksichtigt wird.

7. Verfahren nach einem der vorhergehenden Ansprüche, **dadurch gekennzeichnet, dass** das Verfahren unter Verwendung mindestens eines neuronalen Netzes ausgeführt wird.

8. Verfahren nach einem der vorhergehenden Ansprüche, **dadurch gekennzeichnet, dass** das Aufgabenprofil in Teilaufgaben mit Auswahlkriterien heruntergebrochen wird, wobei eine vordefinierte Metrik und/ oder ein neuronales Netz verwendet wird.

9. Verfahren nach einem der vorhergehenden Ansprüche, **dadurch gekennzeichnet, dass** die Auswahlkriterien und/ oder die Auswahlinformation optisch ausgelesen, gemessen, mittels einer Schnittstelle ausgelesen und/ oder empirisch ermittelt wird.

10. Verfahren nach einem der vorhergehenden Ansprüche, **dadurch gekennzeichnet, dass** potentiell ausführende Agenten anhand einer Bilderkennung, eines optischen Codes, einer Mustererkennung und/ oder unter Verwendung eines bildverarbeitenden Verfahrens erkannt werden.

11. Verfahren nach einem der vorhergehenden Ansprüche, **dadurch gekennzeichnet, dass** das optische Erfassen durch mindestens einen optischen Sensor mindestens eines Agenten erfolgt.

12. Verfahren nach einem der vorhergehenden Ansprüche, **dadurch gekennzeichnet, dass** das Auswählen der auszuführenden Agenten anhand einer Metrik erfolgt, welche bestimmt, welcher Agent die Teilaufgabe besonders trefflich ausführen kann.

13. Systemanordnung zum verteilten und kooperativen Problemlösen im realweltlichem Raum durch autonome Agenten mit automatisierten Einrichtungen von Kommunikationskanälen, aufweisend:
- eine Schnittstelleneinheit eingerichtet zum Bereitstellen (100) eines realweltlichen Aufgabenprofils;
- eine Identifizierungseinheit eingerichtet zum Identifizieren (101) von potentiell ausführenden Agenten anhand jeweils derer Registrierungsinformation und/ oder mittels eines stetigen Auslesens von bildgebenden Sensoren durch bekannte ausführende Agenten;
- eine Abgleicheinheit eingerichtet zum Abgleichen (102) der identifizierten (101), potentiell ausführenden Agenten mit dem bereitgestellten Aufgabenprofil, wobei das Aufgabenprofil in Teilaufgaben mit Auswahlkriterien heruntergebrochen wird (103) und die Agenten Auswahlinformation bezüglich der Auswahlkriterien über einen Kommunikationskanal bereitstellen (104);
- eine Auswahleinheit eingerichtet zum Auswählen (105) von auszuführenden Agenten anhand des Abgleichs der Auswahlkriterien und bereitgestellter Auswahlinformation;
- eine Zuweisungseinheit eingerichtet zum Zuweisen (106) der jeweiligen Teilaufgabe an jeweils einen auszuführenden Agenten über den Kommunikationskanal;
- mindestens eine Sensoreinheit eingerichtet zum optischen Erfassen (108) eines Ergebnisses nach dem Ausführen (107) der jeweiligen Teilaufgabe durch mindestens einen Agenten; und
- eine Adaptionseinheit eingerichtet zum Angleichen (109) des realweltlichen Aufgabenprofils in Abhängigkeit des erfassten Ergebnisses.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
